# DEMANDE DE BREVET EUROPEEN

(11) **EP 0 685 361 A1**
(43) Date de publication de la demande: **06.12.1995**
(21) Numéro de dépôt: 95450010.4
(22) Date de dépôt: 30.05.1995
(51) Int. Cl.: B60P 1/54

(54) **Dispositif de montage amovible d'une grue auxiliaire de véhicule**

(30) Priorité: 30.05.1994 FR 9406916
(71) Demandeur: SARL COMATEC, Société à Responsabilité Limitée, F-33650 Saint Medard d'Eyrans (FR)
(72) Inventeur: Aussel, Henry, F-33730 Uzeste (FR)
(74) Mandataire: Thébault, Jean-Louis

(57) **Abrégé**

- L'invention concerne un dispositif de montage amovible d'une grue auxiliaire de véhicule (2), notamment du type comprenant un moteur thermique, une centrale hydraulique et des distributeurs, sur une remorque à plateau (1), ladite grue (2) comprenant un châssis (7) formant éventuellement chariot, muni de galets moteurs (16) susceptibles de rouler sur des rails de guidage (3) généralement à section en I intégrés dans le plateau (1) de la remorque, ledit châssis (7) supportant à sa partie supérieure un bras articulé (8) et à sa partie inférieure des paires de crochets (26) disposés de part et d'autre de l'âme (3a) sous les ailes supérieures (5) de chaque rail de guidage (3), caractérisé en ce que les crochets (26) d'une même paire sont mobiles entre une première position de verrouillage et une seconde position de déverrouillage et en ce qu'il comprend des moyens de manoeuvre (30) de ces crochets entre ces deux positions, de manière à rendre lesdits crochets escamotables.
- Application aux grues auxiliaires de véhicules.

## Description

La présente invention a pour objet un dispositif de montage amovible d'une grue auxiliaire de véhicule.

Les grues auxiliaires de véhicule, qu'elles soient montées sur un support fixe ou sur un support mobile, tel que le plateau d'une remorque, sont bien connues dans l'art antérieur. Mais ces grues ne sont pas aisément déposables ou reposables sur leur support car, notamment dans les cas des grues auxiliaires de véhicules disposées sur le plateau de remorques, des crochets s'engagent sous les ailes supérieures de part et d'autre de l'âme des rails de guidage. Il est dans ce cas nécessaire de retirer la grue par l'arrière de la remorque en la faisant reculer jusqu'à ce que les crochets se désengagent des rails, la grue devant être maintenue par tout dispositif approprié.

Dans la suite du texte, on utilisera indifféremment remorque pour désigner les remorques, semi-remorques, porteurs ou analogues.

Une telle grue montée sur le plateau d'une remorque a pour fonction, par exemple dans le cadre du transport de bois, de charger la remorque dans la forêt.

Si cette grue est nécessaire en forêt pour le chargement du bois, elle est bien souvent inutile lorsque la remorque est déchargée, par exemple dans une papeterie, où l'on dispose sur site d'appareils de manutention appropriés indépendants.

Il faut alors effectuer un mouvement de la grue avant le déchargement de la remorque, car le bras de celle-ci est posé sur le chargement de bois pendant le transport.

Lorsque la remorque est chargée de produits délicats par exemple des sacs de ciment, le bras ne peut être en appui sur ces sacs au risque de les déchirer. De plus, lorsqu'il s'agit de produits sur palettes par exemple, emballés, les éventuelles fuites d'huile du circuit hydraulique peuvent les souiller.

De plus, la grue étant en permanence disposée sur le plateau de la remorque, son poids mort (environ 3 000 kg) doit constamment être déduit de la charge utile du véhicule. Egalement, la présence de la grue sur la remorque diminue la surface utile de chargement, notamment dans le cas des palettes. Ces inconvénients sont encore plus gênants si la remorque est également utilisée pour le transport de site à site d'autres produits qui ne nécessitent pas cette grue pour leur chargement et/ou déchargement sur le plateau de la remorque.

Les grues de l'art antérieur n'étant pas aisément déposables du plateau qui les porte, chaque véhicule qui se rend en forêt pour charger du bois doit disposer de sa propre grue, ce qui alourdit considérablement les frais d'équipement.

Tous ces inconvénients sont encore amplifiés si la grue vient à tomber en panne. La remorque dispose alors d'une charge inutilisable voire encombrante jusqu'à la réparation de la grue, ce qui peut quelquefois prendre plusieurs jours.

De plus, la grue n'est disponible pour cette réparation que lorsque la remorque n'est pas utilisée sous peine de perdre des heures d'utilisation par immobilisation.

Le but de l'invention est de proposer une grue auxiliaire de véhicule qui pallie les inconvénients précités.

Dans ce but, l'invention a pour objet un dispositif de montage amovible d'une grue auxiliaire de véhicule, notamment du type comprenant un moteur thermique, une centrale hydraulique et des distributeurs, sur une remorque à plateau, ladite grue comprenant un châssis formant éventuellement chariot muni de galets moteurs susceptibles de rouler sur des rails de guidage généralement à section en I intégrés dans le plateau de la remorque, ledit châssis supportant à sa partie supérieure un bras articulé et à sa partie inférieure des paires de crochets disposés de part et d'autre de l'âme sous les ailes supérieures de chaque rail de guidage, caractérisé en ce que les crochets d'une même paire sont mobiles entre une première position de verrouillage et une seconde position de déverrouillage et en ce qu'il comprend des moyens de manoeuvre de ces crochets entre ces deux positions, de manière à rendre lesdits crochets escamotables.

Avantageusement, les crochets sont mobiles en translation, parallèlement à l'axe de rotation des galets et comprennent des trous ovalisés coaxiaux aux paliers des galets, de façon que ces paliers assurent le guidage lors du mouvement en translation.

De préférence, les crochets ont une section en forme de L, les branches horizontales du L étant agencées pour s'engager de part et d'autre de l'âme sous les ailes supérieures des rails.

Avantageusement, les moyens de manoeuvre des crochets sont des vérins hydrauliques, un vérin hydraulique étant prévu par paire de crochets de chaque rail et disposé transversalement, en position médiane et le dispositif comprend, pour chaque paire de crochets, des moyens de guidage comprenant deux ergots à extrémités chanfreinées, prévus pour venir de part et d'autre de chaque rail.

De préférence, le châssis est muni d'au moins deux pieds articulés et de moyens de commande de ces derniers, par exemple des vérins hydrauliques, répartis avec au moins un pied de part et d'autre de l'axe longitudinal de la remorque.

D'autres caractéristiques et avantages de l'invention ressortiront de la description qui va suivre d'un mode de réalisation préféré de celle-ci, description donnée à titre d'exemple uniquement, en référence aux dessins annexés sur lesquels :
- Figure 1 est une représentation schématique en perspective d'une partie de l'arrière d'un plateau d'une remorque, représentant la grue auxiliaire de véhicule sur son support,
- Figure 2 est une représentation schématique en coupe transversale d'une partie de l'arrière de la grue et du plateau de la figure 1,
- Figures 3 et 4 illustrent les deux positions extrêmes de verrouillage et de déverrouillage des crochets.
- Figures 5a à 5e sont un synoptique du chargement ou du déchargement de la grue sur la remorque.

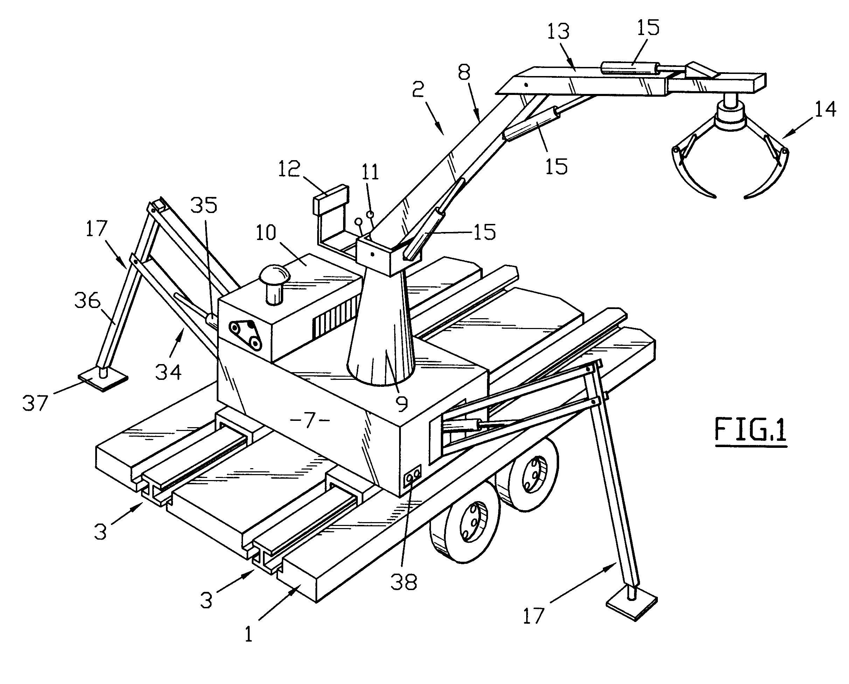

La figure 1 représente en perspective l'arrière du plateau 1 d'une remorque, sur laquelle est disposée une grue auxiliaire de véhicule 2.

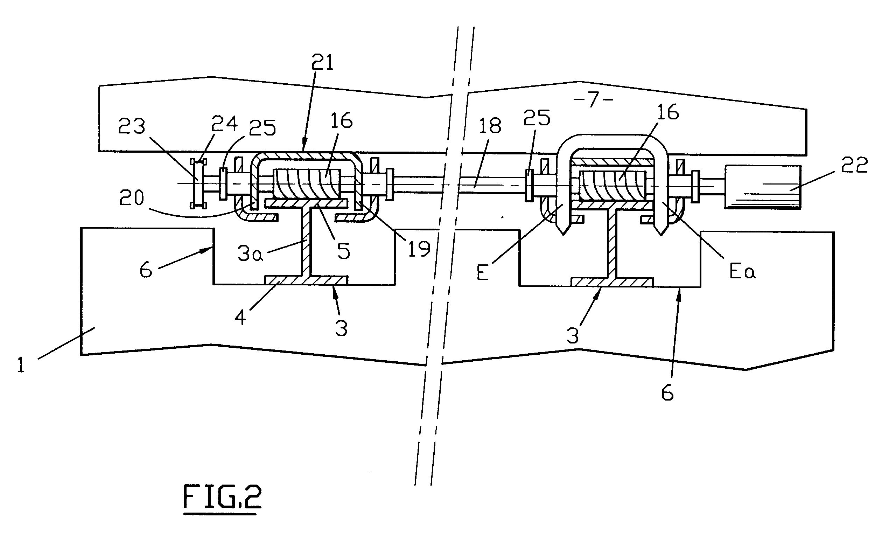

Le plateau 1 de la remorque est, de façon connue, muni de rails de guidage 3 disposés longitudinalement. Ces rails 3 sont généralement à section en I, leurs ailes inférieures 4 étant solidaires du plateau 1 (voir figure 2), leurs ailes supérieures 5 formant le support de roulement de la grue 2 et servant à son guidage, ces ailes 4 et 5 étant reliées par une âme 3a. Ces rails 3 sont généralement disposés dans des rainures 6 ménagées dans le plateau 1, leurs ailes supérieures 5 affleurant à la surface du plateau 1 (figure 2).

La grue auxiliaire de véhicule 2 comprend un châssis 7 formant chariot supportant un bras articulé 8 à sa partie supérieure. Dans la suite de la description, les références à l'arrière correspondent aux parties qui sont au premier plan de la figure 1, c'est à dire à l'arrière de la remorque, les références à l'avant correspondant aux parties en second plan.

Le bras articulé 8 est de type connu. Il comprend une embase 9 qui peut tourner sur le châssis 7, un bloc 10 muni notamment du moteur thermique de la grue et des moyens de commande de celle-ci (par exemple leviers 11, le siège de l'opérateur étant représenté en 12), et une flèche 13 articulée et télescopique munie d'un grappin 14. Le bras et la flèche sont manoeuvrés par des vérins hydrauliques représentés en 15.

Le châssis 7 est schématisé sur les figures sous la forme d'un parallélépipède rectangle. Il est notamment muni de galets moteurs 16 à sa face inférieure et de pieds articulés 17 (voir figure 1).

La figure 2 représente l'agencement des galets moteurs 16 sous le châssis 7. Les galets 16 sont montés sur un arbre 18, lequel tourne dans des paliers P montés dans les branches descendantes 19, 20 d'un profilé en U renversé 21 solidaire du châssis 7. Ce profilé 21 est muni de moyens de guidage comprenant deux ergots E, Ea à extrémités chanfreinées, prévus pour venir de part et d'autre de chaque rail 3.

Bien entendu, le montage des profilés 21 et des galets 16 sur le châssis 7 est tel que ces derniers puissent rouler sur les rails 3 du plateau 1 de la remorque.

Les galets arrière 16 (figure 2) sont montés solidaires d'un même arbre 18 sur lequel est monté un moteur hydraulique 22 solidaire du châssis 7. Les galets avant 16 (non représentés) sont également montés solidaires d'un même arbre 18. Les arbres 18 avant et arrière sont chacun munis à une extrémité d'un pignon 23 sur lequel engrène une chaîne 24, en sorte que le mouvement du moteur 22 soit communiqué à chacun des galets.

Les paliers P support des arbres 18 sont munis, de part et d'autre du profilé en U renversé 21, de collerettes 25.

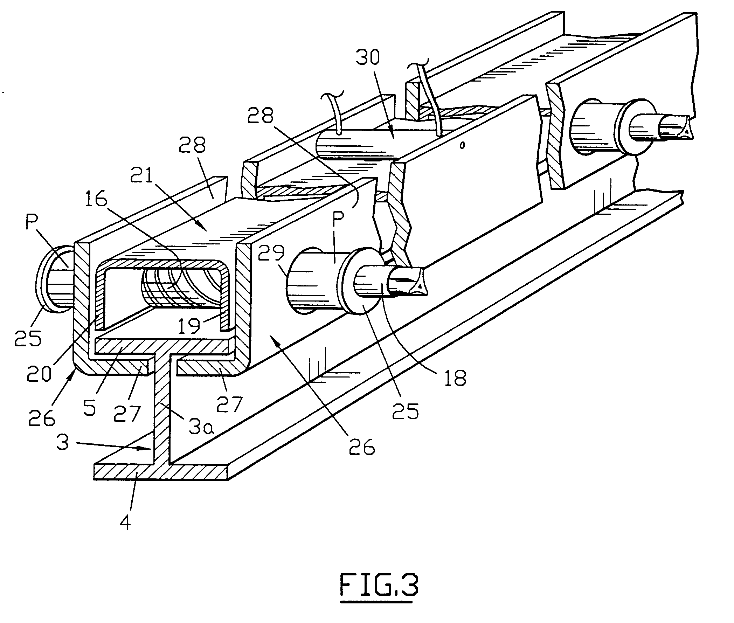

Ainsi que représenté en détail sur la figure 3, les profilés en U renversé 21 sont latéralement flanqués de paires de crochets 26 à section en L, agencés en sorte que les branches horizontales 27 de chaque L puissent s'engager par paire de part et d'autre de l'âme 3a sous les ailes supérieures 5 des rails de guidage 3 du plateau 1.

La branche verticale 28 du L de chaque crochet 26 est munie de trous 29 coaxiaux aux paliers P des arbres 18 des galets 16. Ces trous 29 sont agencés en sorte que les paliers P puissent les traverser. Ces trous 29 sont légèrement ovalisés, afin que les crochets 26 puissent librement coulisser sur les paliers P dans un mouvement de translation, sans toutefois dépasser les collerettes 25 qui servent de butée.

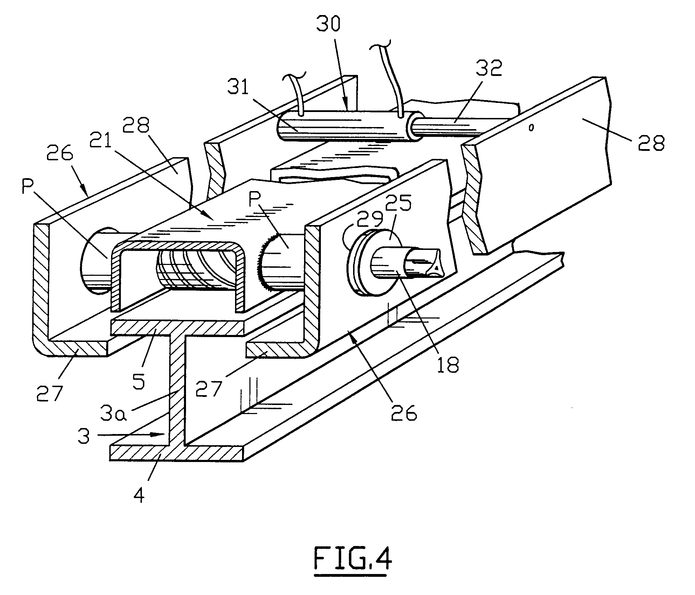

La course des crochets 26 sur les paliers P, entre le profilé en U renversé 21 et les collerettes 25, est telle que dans une première position extrême dite de verrouillage (figure 3), les branches horizontales 27 du L s'engagent de part et d'autre de l'âme 3a sous les ailes supérieures 5 des rails 3 et, dans une seconde position extrême, dite de déverrouillage (figure 4), les branches horizontales 27 des crochets en L soient dégagées des ailes supérieures 5 des rails 3, l'écartement de chaque paire de branches horizontales 27 étant au moins supérieur à la largeur de l'aile supérieure 5 des rails 3.

Un vérin hydraulique 30 est fixé aux crochets 26 de chaque paire, en partie médiane, son corps 31 étant fixé à l'un des crochets de la paire, sa tige 32 étant fixée à l'autre crochet de cette paire. Sur les figures 3 et 4, le vérin 30 est représenté disposé au dessus de la branche horizontale du profilé 21. Les dimensions et la course de ces vérins 30 sont telles qu'ils puissent actionner chacun une paire de crochets 26 entre les première et seconde positions de verrouillage et de déverrouillage.

Des clavettes (non représentées) sont prévues pour maintenir les crochets 26 en position verrouillée. Ces clavettes sont un gage de sécurité. Leur mise en place manuelle permet à l'opérateur de s'assurer du verrouillage correct des crochets et de pallier éventuellement aux déficiences du vérin 30.

Les pieds articulés 17 sont au nombre de deux, disposés de part et d'autre de l'axe longitudinal de la remorque. Ils sont formés d'un cadre 34 en forme de parallélogramme déformable actionné par un vérin 35 et d'un poteau 36 dont le socle articulé 37 est agencé pour pouvoir prendre appui au sol.

Des commandes 38 des vérins des pieds 17, du bras 8 et des crochets 26 sont disposées sur le châssis en sorte d'être manipulés par un opérateur au sol.

Bien entendu, les commandes 11 nécessaires à la grue 2 pour son déplacement sur le plateau 1 ou le chargement de ce dernier sont également accessibles du siège 12.

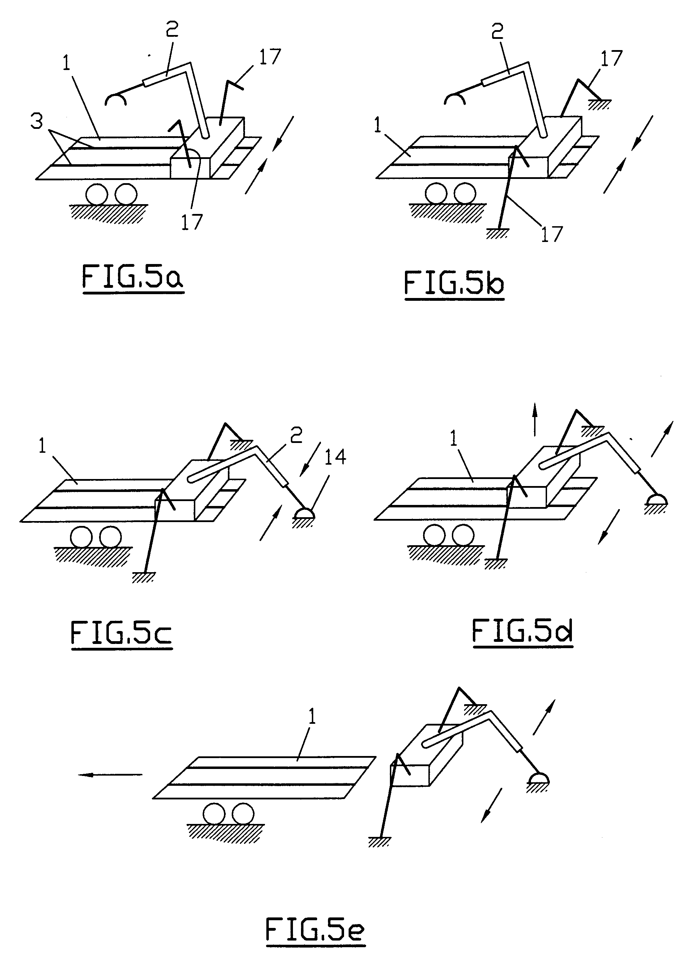

La dépose de la grue du plateau 1 de la remorque s'effectue comme représenté sur le synoptique des figures 5a à 5e. La disposition des crochets 26 dans la première position de verrouillage est représentée sur ces figures par des flèches convergentes (figures 5a à 5c). Leur disposition dans la seconde position de déverrouillage est représentée par des flèches divergentes (figures 5d et 5e).

Sur la figure 5a, la grue 2 repose sur les rails 3 du plateau 1, les pieds 17 relevés.

L'opérateur abaisse les pieds 17 jusqu'à ce qu'ils viennent en contact avec le sol (figure 5b).

Ensuite, l'opérateur manoeuvre le bras 8 jusqu'à ce que le grappin 14 vienne en contact avec le sol à l'arrière du plateau (figure 5c).

Puis, il retire les clavettes et écarte les crochets 26 dans la seconde position de déverrouillage. Ensuite, il manoeuvre de nouveau les pieds 17 et le bras 8 pour soulever la grue du plateau 1 de la remorque (figure 5d).

Il peut alors retirer la remorque, la grue restant en appui sur ses deux pieds et sur son bras (figure 5e). Elle est alors disponible pour une autre remorque, par exemple, ou elle attendra le retour de la première.

La grue est remise en place sur les rails 3 dans une opération inverse de celle décrite ci-dessus, l'opérateur ayant éventuellement pris des repères pour le placement de sa remorque de façon à faciliter encore plus le repositionnement. Le mouvement articulé des pieds 17 permet un certain jeu, ce qui facilite aussi, avec les moyens de guidage E, Ea le repositionnement aisé de la grue 2 sur les rails 3.

Ces opérations de dépose et de pose de la grue s'effectuent en quelques minutes.

Ainsi, le dispositif de l'invention permet de résoudre les défauts des grues de l'art antérieur et apporte de nombreux avantages, notamment :
- La dépose et la pose de la grue 2 sur les rails 3 sont rapides et aisées : ceci permet à l'opérateur de charger davantage sa remorque en déposant la grue. Celle-ci ne représente alors plus une charge inutile et encombrante, voire gênante. Le plateau est libéré pour transporter, par exemple, des sacs de ciment ou des produits en palettes car la longueur de la remorque correspond à un nombre exact de palettes normalisées : la grue déposée, la charge utile de la remorque est pleinement disponible et, il n'y a plus de risque de déchirer ou de provoquer des souillures des produits.
- La possibilité est offerte à plusieurs opérateurs d'utiliser sur un même site l'un après l'autre la même grue, ceci permet d'économiser sur les frais d'équipement.
- Si la grue tombe en panne, une réparation rapide provisoire (éventuellement avec une pièce d'une grue identique) peut permettre la dépose de la grue pour réparations sans nécessiter l'immobilisation de la remorque.

La grue peut aussi être remplacée quasi instantanément par une autre en état de marche.

Selon une variante de réalisation, le vérin 30 peut être disposé à l'intérieur du profilé en U renversé 21 à travers des trous ménagés dans ses branches descendantes 19 et 20.

On peut également munir le châssis 7 de quatre pieds articulés 17 afin de diminuer l'encombrement de la grue lorsqu'elle est déposée, le bras articulé 8 ne devant alors plus nécessairement prendre appui sur le sol.

Bien entendu, le dispositif de l'invention n'est pas limité au mode de réalisation représenté et décrit ci-dessus, mais en couvre au contraire toutes les variantes, notamment en ce qui concerne les formes et dimensions des crochets, de leurs moyens de manoeuvre, de la grue et des pieds articulés.

## Revendications

1. Dispositif de montage amovible d'une grue auxiliaire de véhicule (2), notamment du type comprenant un moteur thermique, une centrale hydraulique et des distributeurs, sur une remorque à plateau (1), ladite grue (2) comprenant un châssis (7) formant éventuellement chariot, muni de galets moteurs (16) susceptibles de rouler sur des rails de guidage (3) généralement à section en I intégrés dans le plateau (1) de la remorque, ledit châssis (7) supportant à sa partie supérieure un bras articulé (8) et à sa partie inférieure des paires de crochets (26) disposés de part et d'autre de l'âme (3a) sous les ailes supérieures (5) de chaque rail de guidage (3), caractérisé en ce que les crochets (26) d'une même paire sont mobiles entre une première position de verrouillage et une seconde position de déverrouillage et en ce qu'il comprend des moyens de manoeuvre (30) de ces crochets entre ces deux positions, de manière à rendre lesdits crochets escamotables.

2. Dispositif selon la revendication 1, caractérisé en ce que les crochets (26) sont mobiles en translation, parallèlement à l'axe de rotation des galets (16).

3. Dispositif selon la revendication 1 ou 2, caractérisé en ce qu'il comprend des clavettes qui coopèrent avec le châssis (7) et les crochets (26) dans la première position de verrouillage, en sorte de bloquer lesdits crochets (26) dans cette première position.

4. Dispositif selon la revendication 2 ou 3, caractérisé en ce que les crochets (26) comprennent des trous ovalisés (29) coaxiaux aux paliers (P) des galets (16), de façon que ces paliers (P) assurent le guidage lors du mouvement en translation.

5. Dispositif selon l'une quelconque des revendications 1 à 4, caractérisé en ce que les crochets (26) ont une section en forme de L, les branches horizontales (27) du L étant agencées pour s'engager de part et d'autre de l'âme (3a) sous les ailes supérieures (5) des rails (3).

6. Dispositif selon l'une quelconque des revendications 1 à 5, caractérisé en ce que les moyens de manoeuvre (30) des crochets (26) sont des vérins hydrauliques, un vérin hydraulique étant prévu par paire de crochets (26) de chaque rail (3) et disposé transversalement en position médiane.

7. Dispositif selon l'une quelconque des revendications 1 à 6, caractérisé en ce qu'il comprend pour chaque paire de crochets (26) des moyens de guidage (E, Ea) comprenant deux ergots à extrémités chanfreinées prévus pour venir de part et d'autre de chaque rail (3).

8. Dispositif selon l'une quelconque des revendications 1 à 7, caractérisé en ce que le châssis (7) est muni d'au moins deux pieds articulés (17) et de moyens de commande de ces derniers (35), par exemple des vérins hydrauliques.

9. Dispositif selon la revendication 8, caractérisé en ce que les pieds articulés (17) sont répartis avec au moins un pied de part et d'autre de l'axe longitudinal de la remorque.

10. Dispositif selon la revendication 8 ou 9, caractérisé en ce que le châssis (7) est muni de quatre pieds articulés (17).
